# EUROPEAN PATENT SPECIFICATION

(11) **EP 4 649 351 B1**
(45) Date of publication and mention of the grant of the patent: **09.12.2026**
(21) Application number: 24700256.1
(22) Date of filing: 09.01.2024
(51) Int. Cl.: G02B 27/10

(54) **A LIGHT GENERATION SYSTEM FOR ELECTRICALLY CORRELATED COLOR TEMPERATURE TUNABILITY**
LICHTERZEUGUNGSSYSTEM FÜR ELEKTRISCH KORRELIERTE FARBTEMPERATURABSTIMMBARKEIT
SYSTÈME DE GÉNÉRATION DE LUMIÈRE POUR ACCORDABILITÉ DE TEMPÉRATURE DE COULEUR CORRÉLÉE ÉLECTRIQUEMENT

(30) Priority: 10.01.2023 EP 23150827
(43) Date of publication of application: 19.11.2025
(73) Proprietor: Signify Holding B.V., 5656 AE Eindhoven (NL)
(72) Inventor: VAN BOMMEL, Ties, 5656 AE Eindhoven (NL); HIKMET, Rifat, Ata, Mustafa, 5656 AE Eindhoven (NL); MALLENS, Erik, Petrus, Johannes, 5656 AE Eindhoven (NL)
(74) Representative: Verweij, Petronella Daniëlle
(86) International application number: PCT/EP2024/050366
(87) International publication number: WO 2024/149740

(56) References cited:
- WO-A1-2022/143318
- US-A1- 2020 333 699

## Description

### FIELD OF THE INVENTION

The invention relates to a light generation system for electrical correlated color temperature tunability.

### BACKGROUND OF THE INVENTION

Combining light to provide a correlated color temperature (CCT) tunability based on white light and blue light is known. The color temperature of the light emitted from a light generation system, such as a laser-phosphor-based stage lighting engine, is based only on the amount of luminous flux of the light emitted from two or more laser banks relatively to each other. A blue light emitted from a first laser light source is converted to a yellow light using a phosphor-based wavelength conversion, and blue light emitted from a second laser light source are then merged with the yellow light into white light. The light from each of the laser banks can be adjusted independently and merged using an optical system as described in CN214501113U.

When merging the light as described in CN214501113U the light from each of the laser banks are related equally to each other and the correlated color temperature tunability is adjusted by adjusting the amount of luminous flux emitting from the first laser bank to the amount of luminous flux emitting from the second laser bank. The adjustment of the brightness and of the correlated color temperature is, however, not optimal, and lacks fine tuning related to more accurate variation in the correlated color temperature tunability.

### SUMMARY OF THE INVENTION

It is an object of the present invention to overcome this problem, and to provide a light generation system with optimal flexibility in terms of brightness and electrical tunability related to the correlated color temperature (CCT).

According to a first aspect of the invention, this and other objects are achieved by providing a light generation system comprising a first laser light source, a second laser light source, a wavelength conversion unit, a diffuser and a beam-splitting-beam-combiner, wherein:
- said first laser light source is configured to generate a first light beam having a first polarization,
- said second laser light source is configured to generate a second light beam having a second polarization different from the first polarization,
- said beam-splitting-beam-combiner comprises a reflective polarizer and a specular semi-reflective layer and said beam-splitting-beam-combiner is configured to substantially reflect said first light beam and transmit a first portion of said second light beam in a first direction, such that said first light beam and said first portion of said second light beam are merged to an added light beam, and said beam-splitting-beam-combiner is configured to substantially reflect a second portion of said second light beam in a second direction different from the first direction;
- said wavelength conversion unit is configured to convert at least part of the added light beam into a converted light,
- at least one transmitting and/or reflecting unit configured to reflect and/or transmit said converted light and/or the second portion of said second light beam in said third direction,
- the diffuser is configured to diffuse at least a part of the second portion of said second light beam as a diffused light,
- the light generation system further comprises a beam-combiner configured to provide a combined light beam comprising said converted light and said diffused light, and
- wherein the combined light beam is white light having a correlated color temperature in a range from 2700K to 10000K and a color rendering index of at least 70.

The light generation system comprises a beam-splitting-beam-combiner which may be defined as an asymmetric beam-splitting-beam-combiner. The light generation system has at least one first laser light source and at least one second laser light source. The first and the second laser light source may be arranged in each of their respective laser banks. When in use the first laser light source is configured to generate a first light beam having a first luminous intensity, and the second laser light source is configured to generate a second light beam having a second luminous intensity. The first laser light source is configured to generate the first light beam with a first polarization. The first polarization may be linearly p-polarized light. The second laser light source is configured to generate the second light beam with a second polarization different from the first polarization. The second polarization may be a s-polarization. The first light beam and transmit a first portion of said second light beam is directed in a first direction. The second portion of said second light beam is directed a second direction. The second direction is different from the first direction. The second direction may be perpendicular to the first direction.

The beam-splitting-beam-combiner is configured to reflect at least part of said first light beam. The beam-splitting-beam-combiner is furthermore configured to transmit a first portion of said second light beam, such that said first light beam and said first portion of said second light beam are merged to an added light beam emitting in the same direction. The beam-splitting-beam-combiner is also configured to reflect a second portion of said second light beam in another direction away from the added light beam.

The light generation system comprises at least one transmitting and/or reflecting unit. The transmitting and/or reflecting unit is configured to direct said converted light and or the second portion of said second light beam in a third direction. The third direction may be similar or opposite to the first or the second direction. The third direction may be different from the first and/or the second direction. The transmitting and/or reflecting unit is configured to direct each of the added light beam and/or the second portion of said second light beam in a respective predetermined direction.

The light generation system also comprises a wavelength conversion unit. The wavelength conversion unit is configured to convert at least part of the added light beam, wherein the added light beam comprises the first light beam and a first portion the second light beam. The added light beam is reflected by the wavelength conversion unit as a converted light. The added light beam may alternatively be transmitted through the wavelength conversion unit and be converted to converted light. The converted light may be directed in a third direction, wherein the third direction may be similar or opposite to the first or the second direction. The third direction may be different from the first and/or the second direction.

The light diffuser is configured to diffuse the second portion of said second light beam into diffused light. The transmitting and/or reflecting unit is configured to direct each of the converted light and/or the diffused light in a respective predetermined direction. The transmitting and/or reflecting unit is capable of directing the converted light towards a beam-combiner. The transmitting and/or reflecting unit is furthermore capable of directing the diffused light towards a beam-combiner. The beam-combiner combines the converted light and the diffused light into a combined light beam.

The asymmetric beam-splitting-beam-combiner for a light generation system comprises a reflective polarizer and a specular semi-reflective layer. A first and second polarizer are arranged such that light emitted from two laser light source each are polarized by the respective polarizer before being reflected by and/or transmitted through the beam-splitting-beam-combiner. The first light beam is polarized as p-polarized light using a first polarizer, and the second light beam is polarized as s-polarized light using a second polarizer. The first laser light source is configured to emit a first light beam through the first polarizer, such that a s-polarization of the first light beam is blocked, and the p-polarized beam is directed towards the beam-splitting-beam-combiner. The second laser bank is configured to emit a second light beam through the second polarizer, such that a p-polarization of the second light beam is blocked and the s-polarized beam is directed towards the beam-splitting-beam-combiner.

The beam-splitting-beam-combiner's reflective polarizer has a first surface provided with a specular semi-reflective layer. The reflective polarizer provided with specular semi-reflective layer may be referred to as a semi-specular-reflective-mirror. The beam-splitting-beam-combiner is arranged such that the entire first light beam, which has a first polarization, is reflected 100 % by the first surface. The first light beam is directed in a first direction away from the beam-splitting-beam-combiner. The first light beam may also be directed away from the first polarizing unit. The beam-splitting-beam-combiner is furthermore arranged such that a first portion of the second polarization of the second light beam is transmitted through the semi-specular-reflective-mirror. The beam-splitting-beam-combiner is furthermore arranged such that the first portion of the second polarization of the second light beam is entering a second surface of the beam-splitting-beam-combiner's reflective polarizer and exiting the first surface of the reflective polarizer. The first portion of the second polarization of the second light beam is directed in the first direction away from the beam-splitting-beam-combiner, such that a total light beam emitted in the first direction comprise both a first polarization of light and a first portion of the second polarization of light.

The term a first polarization of light means a first polarization of the first light beam. The term a second polarization of light means a second polarization of the second light beam. The first polarization is different from the second polarization. The first surface or the second surface of the beam-splitting-beam-combiner is also configured to reflect a second portion of said second polarization of said light beam in a second direction, which is different from the first direction. The second portion of the second polarization of light is directed away from the beam-splitting-beam-combiner. The second portion of the second polarization of light may also be directed towards a transmitting and/or reflecting unit, e.g., a dichroic mirror or a polarizing beam splitter. The second portion of the second polarization of light may also be directed away from the transmitting and/or reflecting unit. The transmitting and/or reflecting unit may direct the second portion of the second polarization of light towards a light diffuser.

Such an asymmetric beam-splitting-beam-combiner provides a solution wherein the luminous flux emitted from each of the first laser bank and the second laser bank may be varied. If the luminous flux emitting from the first laser bank is varied, the luminous flux is varied in a first direction of light. If the luminous flux emitting from the second laser bank is varied, the luminous flux is varied both in a first direction of light and a second direction of light. In is therefore possible to differentiate the luminous flux in the first direction of light relative to the second direction of light. When varying the luminous flux emitted from each of the first laser bank and the second laser bank the light may when combined be controlled such that the correlated color temperature may be varied and still provide optimal flexibility in terms of brightness of the combined light. The light generation system provides a combined light beam comprising the converted light and the diffused light. The combined light beam comprises white light having a correlated color temperature in a range from 2700 to 10000K and a color rendering index of at least 70.

The combination of light from both laser banks provides a light beam in the first direction, which comprises a first polarization different from a second polarization. By providing a light beam which comprises a first or a second polarization different from each other the eye safety will be increased, by making the blue laser light eye safe.

The beam-splitting-beam-combiner comprises a reflective polarizer and a specular semi-reflective layer, which is configured to substantially reflect the first light beam and transmit a first portion of the second light beam, such that the first light beam and the first portion of the second light beam are merged to an added light beam and reflect a second portion of said second light beam. By "substantially reflect" it is intended to mean that the beam-splitting-beam-combiner reflects at least 90 % of the first light beam. Preferably, the beam-splitting-beam-combiner reflects at least 95 % of the first light beam. More preferably the beam-splitting-beam-combiner reflects at least 98% of the first light beam. Most preferably the beam-splitting-beam-combiner reflects at least 99 % of the first light beam, for example 100 % of the first light beam.

In an embodiment, the first light beam comprises blue light having a first dominant peak wavelength λ1 and the second light beam comprises blue light having a second dominant peak wavelength λ2, wherein λ2-λ1≥20nm.

In an embodiment, the converted light may comprise one or more of green light, yellow light and red light.

It is very clear that the light generation system is capable of combining the first light beam and a first portion of the second light beam with a beam-splitting-beam-combiner, such that the first light beam and the first portion of the second light beam are merged to an added light beam, which then is directed towards the wavelength convention unit, wherein the added light beam is converted into a converted light. For example, if the first light beam comprises blue light having a first dominant peak wavelength λ1 and the second light beam comprises blue light having a second dominant peak wavelength λ2, the added light beam comprises a first blue light beam having a first dominant peak wavelength λ1 and the first portion of the second blue light beam having a second dominant peak wavelength λ2. These two beams will be added and converted to a yellow light, which can be merged with a second portion of the second blue light beam having a second dominant peak wavelength λ2. When merging the light in a combined light beam, the combined light beam will provide a white light having a correlated color temperature. The light generation system may provide a very accurate and fine-tuned electrical controlled correlated color temperature tunability. The correlated color temperature may be in a range from 2700K to 10000K having a color rendering index of at least 70.

In an embodiment, a specular semi-reflective layer is arranged on a surface of the reflective polarizer.

In an embodiment, a reflectivity of the specular semi-reflective layer is in a range from 20% to 80% in a visible wavelength range.

In an embodiment, the reflectivity of said specular semi-reflective layer is in a range from35% to 65%.

The visible wavelength range can be defined as a range from 400nm to 800nm.The specular semi-reflective layer may be intended to reflect and/or transmit a blue wavelength range, such that the specular semi-reflective layer is in a range from 20% to 80% in a blue wavelength range, preferably 35% to 65%. The blue wavelength range can be defined as a range from 420nm to 490nm.

For example, creating white light having a high correlated color temperature the reflectivity of the specular semi-reflective layer may be in a range from 65% to 80%. For example, for creating white light having a low correlated color temperature the reflectivity of the specular semi-reflective layer may in a range from 20% to 35%. For example, for creating white light having a medium correlated color temperature the reflectivity of the specular semi-reflective layer may be in a range from 35% to 65%.

A reflective metallic layer may be arranged on the second surface of the semi-specular-reflective-mirror. The metallic layer may be provided on either a first or a second surface on the semi-specular-reflective-mirror. The semi-specular-reflective-mirror may comprise a predetermined thickness of metallic layer. The thickness of the metallic layer is chosen or predetermined related to the transmission and reflection of a light beam.

The semi-specular-reflective-mirror may comprise a metallic layer. The metallic layer may comprise aluminium. Alternatively, the metallic layer may comprise silver. Alternatively, the metallic layer may comprise another reflective metal. The metallic layer may be protected and enhanced using an additional dielectric layer. Reflection losses may be reduced with dielectric multilayer coatings.

A luminous flux ratio between an amount of lumen in said first portion of said second light beam and an amount of lumen in said second portion of said second light beam is defined by a predefined thickness of said metallic layer. A luminous flux ratio may be determined by the thickness of the reflective metallic layer. The luminous flux ratio defines the relation between the first portion of the second polarization of the second light beam transmitted in the first direction, and the second portion of the second polarization of the second light beam is reflected in the second direction. A luminous flux ratio between the first portion of the second light beam and the second portion of the second light beam may be defined by the predefined thickness of the metallic layer. The luminous flux ratio is depending on the application which the asymmetric beam-splitting-beam-combiner is used in or related to.

In an embodiment, the specular semi-reflective layer comprises a first dichroic mirror.

The specular semi-reflective layer dichroic mirror has different optical properties at two or more wavelength ranges having different dominant peak. The dichroic mirror might be reflective below a dominant peak wavelength, and transmissive at a higher dominant peak wavelength. For example, a first light beam comprises blue light having a first dominant peak wavelength λ1 and the second light beam comprises blue light having a second dominant peak wavelength λ2. The dichroic mirror may be transmissive relative to the first light beam, and reflective or partially reflective relative to the second light beam.

The first laser light source may be configured to emit a spectral content of blue light and said wavelength conversion unit may comprise a phosphor conversion layer, such that the light generation system emits a predetermined white light, when the first light beam and a first portion the second light beam are reflected by the wavelength conversion unit's phosphor conversion layer as said converted light.

In an embodiment, the combined light beam is white light having a correlated color temperature in a range from 7000 to 10000K and a color rendering index of at least 80.

The light generation system is configured to provide a combined light beam, wherein the combined light beam comprises white light having an adjustable correlated color temperature in a range from 2700 to 10000K. Alternative the correlated color temperature may be adjustable within a range from 7000 to 10000K.

A correlated color index, CRI may for example be measured as Ra or Ri. The combined light beam comprises white light may have a CRI of at least 80, to ensure that the light effect of the color appearance reflected by an object provides a high quality of color appearance for a user. The CRI of the combined light emitting from the laser-phosphor based light generation system may be related to the amount of light to be converted and to the wavelength conversion unit. A CRI of 70 provides a reduced light color reflection quality than a CRI of 80. But in many applications CRI of 70 will be sufficient. This may reduce the wavelength reflection requirements for the phosphor conversion layer, and consequently be cheaper to manufacture. The CRI of the combined light emitting from the laser-phosphor based light generation system may related to and controlled based on the amount of light to be converted relative to the amount of light which is not converted by wavelength conversion unit.

In an embodiment said at least one transmitting and reflecting unit comprises a second dichroic mirror configured to:
(i) transmit said added light beam towards said wavelength conversion unit and configured to reflect said converted light; or
(ii) reflect said added light beam in towards said wavelength conversion unit and configured to transmit said converted light.

The light generation system may comprise at least one transmitting and reflecting unit. One of the transmitting and reflecting units may be a dichroic mirror, which is configured to transmit the added light beam in the first direction towards a wavelength **conversion** unit, and the dichroic mirror is configured to reflect the converted light in the second direction. The added light beam, which is the light to be converted, may be directed in the first direction towards a wavelength conversion unit. The light to be converted may be led through the dichroic mirror before reaching the wavelength conversion unit. The dichroic mirror may be arranged such that when the first polarization of light and the first portion of the second polarization of light are reflected as converted light by the wavelength conversion unit, the converted light is reflected by the dichroic mirror in the second direction parallel to the second portion of the second light beam, which has not been converted.

Alternatively, the dichroic mirror may be configured to transmit said added light beam in a third direction towards said wavelength conversion unit and configured to reflect said converted light in a fourth direction substantially perpendicular to said third direction. Further alternative is that the dichroic mirror may be configured to reflect said added light beam in a fourth direction towards said wavelength conversion unit and configured to transmit said converted light in a third direction substantially perpendicular to said fourth direction. The third direction is different from the fourth direction. The third direction and the fourth direction are both is different from each of the first and second direction. By the term "substantially perpendicular" it is intended to mean, e.g., 90 degrees +/- 1 or 2 degrees.

**In** an embodiment one of the following:
(i) said light generation system comprises at least one first optic arranged between said transmitting and reflecting unit and said wavelength conversion unit, wherein said first optic is configured to focus said added light beam onto the wavelength conversion unit,
(ii) wherein said wavelength conversion unit is arranged between at least one first optic and at least one second optic, wherein the first optic is configured to focus said added light beam onto the wavelength conversion unit, wherein the second optic is configured to collimate said converted light.

The optic or optics may be arranged between the transmitting and reflecting unit and the wavelength conversion unit, such that the first polarization of light and the first portion of the second polarization of light are directed in a first direction towards a wavelength conversion unit through the focusing optic. The first polarization of light and the first portion of the second polarization of light are directed in a first direction towards a wavelength conversion unit through the optic. The optic may be provided, such that the light is captured and focused to and from the wavelength conversion unit. Further optics may be arranged after the wavelength conversion unit. The beam-splitting-beam-combiner is configured to reflect said second portion of said second light beam towards a diffuser. The semi-specular-reflective-mirror is configured to reflect the second portion of the second polarization of light as a reflected diffused light in the second direction towards a second mirror, which may be a second dichroic mirror. The second portion of the second polarization of light is reflected toward a diffuser using the second mirror. At least one optic may be arranged between a transmitting and/or reflecting unit and diffuser, such that the second portion of the second polarization of light is reflected in a first direction towards the diffuser through the optic or optics. The optic or optics may be arranged, such that the light is captured and focused to and from the diffuser.

In an embodiment, said at least one transmitting and/or reflecting unit comprises a polarizing beam splitter arranged between said beam-splitting-beam-combiner and said diffuser, wherein said diffuser is a reflective diffuser.

The at least one transmitting and/or reflecting unit may comprise a polarizing beam splitter. The polarizing beam splitter may be arranged between the beam-splitting-beam-combiner and the diffuser. The diffuser may be a reflective diffuser. The reflective diffuser is capable of diffusing the light and thereby increase safety precautions, for example for enhancing eye safety. A reflecting unit may be a polarizing beam splitter or similar. The at least one transmitting and/or reflecting unit may arranged between said beam-splitting-beam-combiner and the reflective diffuser, such that the polarizing beam splitter, as being a reflecting unit, directs the second portion of the second polarization of light towards the reflective diffuser.

In an embodiment, a quarter-wave plate is arranged between said polarizing beam splitter and the diffuser.

The quarter-wave plate may be arranged in a position between the second dichroic mirror and the diffuser. The quarter-wave plate may be used for changing the polarization of the second portion of the second polarization of light, before combining the second portion of light with the converted light.

The wavelength conversion unit is configured may reflect a converted light towards a reflecting unit, for example a first dichroic mirror, configured to reflect the converted light in a direction parallel to the second direction, wherein a beam-combiner is configured to transmit the converted light through the beam-combiner, wherein the reflective diffuser is configured to reflect the second portion of the second polarization of light as a reflected diffused light towards the beam-combiner, such that the converted light and reflected diffused light are combined in a combined light beam.

A beam-combiner may be used to recombine beams of light emitted from the first laser bank and the second laser bank. The first polarization of light and the first portion of the second polarization of light are reflected by the wavelength conversion unit as a converted light. The converted light may be reflected by a reflecting unit, for example a dichroic mirror, in a direction parallel to the second direction. The converted light may be transmitted through a beam-combiner. The second portion of the second polarization of light is reflected by the reflective diffuser in a direction towards the beam-combiner. The second portion of the second polarization of light may be transmitted or reflected through a beam-combiner, such that the converted light and the second portion of the second polarization of light are combined in a light beam capable of emitting out of the laser-phosphor based light generation system.

In an embodiment said light generation system comprises a control unit configured to individually control a first luminous intensity of said first light beam and a second luminous intensity of the second light beam, such that in use said control unit controls a ratio between the first and second luminous intensity for controlling a correlated color temperature of said combined light beam.

The control unit is electrically connected to the first laser bank and the second laser bank. The control unit is capable of driving the first laser bank and the second laser bank. The control unit may be capable of driving the first laser bank and the second laser bank independently from one another. The control unit is configured to control the luminous flux emitting from the first laser bank relative to the luminous flux emitting from the second laser bank, such that the control unit may vary the luminous flux emitting from the first and the second laser bank. When varying the luminous flux emitted from each of the first laser bank and the second laser bank, the combined light may be controlled such that the correlated color temperature may be varied and still provide optimal flexibility in terms of brightness of the combined light.

The control unit may vary the luminous flux emitting from the first laser bank relative to the luminous flux emitting from the second laser bank, and thereby alter the correlated color temperature, such that the light generation system provides an electrical correlated color temperature tunability.

The adjustment of brightness and the correlated color temperature is provided with a fine-tuning option related to more accurate variation steps in the correlated color temperature tunability. The optimal solution is provided in that the first surface of the semi-specular-reflective-mirror is configured to reflect a first polarization of the first light beam emitted form a first laser bank in a first direction and the semi-specular-reflective-mirror is configured to transmit a first portion of a second polarization of second light beam emitted form a second laser bank in the first direction, and thereby adding the light beams. A first polarization of a first light beam and part of a second polarization of a second light beam is added and directed towards a phosphor-based wavelength conversion unit forming a yellow light. A second portion of the second polarization of the light beam in a second direction different from the first direction. The yellow light is then merged with the second part of the blue light. The luminous flux of the yellow light and the luminous flux of the second part of the blue light can be varied separately, when adjusting the light emitting from the second laser bank. This provides an enhanced fine-tuning option related to more accurate variation in the correlated color temperature tunability based on the asymmetric beam-splitting-beam-combiner.

In an embodiment, said wavelength conversion unit comprises a luminescent body and a reflector, wherein the reflector is arranged at a side of the luminescent body facing away from a side receiving the added light beam.
The wavelength conversion unit comprises a luminescent body and a reflector. The reflector may be arranged at a side of the luminescent body facing away from a side receiving the added light beam, such that the added light beam is reflected in a predetermined direction relative to the luminescent body.

In an embodiment, the luminescent body comprises a ceramic luminescent element (e.g. a garnet), wherein the ceramic luminescent element comprises a luminescent material of the type A3B5O12:Ce, wherein component A comprises one or more of Y, La, Gd, Tb and Lu, and wherein component B comprises one or more of Al, Ga, In and Sc.

The first laser bank and the second laser bank each comprises at least one laser light source, which is configured to emit a spectral content of blue light and the wavelength conversion unit comprises a phosphor conversion layer. The ceramic luminescent element comprises luminescent material, wherein component A and B is included in the luminescent material. The component A may comprise one or more of Y, La, Gd, Tb and Lu. The component B may comprise one or more of Al, Ga, In and Sc. The ceramic luminescent element may for example comprise a luminescent material of the type Lu,Y,Gd3Al,Ga5O12, wherein A is Lu, Y, Gd and B is Al, Ga, or Lu3Al5O12 wherein A is Lu, Y, Gd and B is Al, etc. Based on the properties of the luminescent material in the ceramic luminescent element, the light generation system is capable of emitting a predetermined white light, when the first added light beam is reflected by the wavelength conversion unit as a converted light.

The phosphor conversion layer comprising the luminescent material converts the blue light range into a range of white light due to the complementarity. The term of LED is referring to a Light Emitting Diode, which alternatively could be any light source based on solid-state lighting. The LED light source emits a spectral content of blue light and the wavelength conversion unit, which comprises a phosphor conversion layer, which converts the reflected light. The light generation system may therefore be capable of emitting a light beam comprising a white light which may be changed within a predefined range. The wavelength conversion unit may comprise a phosphor tile. The phosphor tile may be a ceramic luminescent element. Alternative, the wavelength conversion unit may comprise a phosphor wheel. The added light beam is directed onto a phosphor of the light conversion unit, wherein the added light beam is collimated by the phosphor wheel into converted light generated by the phosphor.

The ratio between the first portion of the second light beam and the second portion of the second light beam may be 3 to 7. The luminous flux ratio may be 3 to 7, which is similar to a ratio of 30 to 70. The luminous flux ratio expresses that 30% of the first portion of the second polarization of the second light beam transmitted in the first direction, and 70% of the second portion of the second polarization of the second light beam may be reflected in a second direction. The luminous flux ratio can be determined by the thickness of the metallic layer.

The luminous flux ratio also expresses that 130% of the entire luminous flux emitted from the first and the second laser bank is directed in a first direction, if the first and the second laser bank provides the same amount of luminous intensity and the first and the second laser bank has a substantially similar beam angle. 70% of the second portion of the second polarization of the second light beam is reflected in the second direction different from the first direction.

The light generation system may be a part of a stage lighting engine or a stage lighting luminaire. A stage lighting engine or a stage lighting luminaire may control the tunability of the CCT and/or the CRI electrical when comprising a light generation system, wherein the light generation system comprises an asymmetric beam-splitting-beam-combiner. Both in a stage lighting engine or a stage lighting luminaire a first laser bank is configured to emit a first light beam having a first polarization, and a second laser bank is configured to emit a second light beam having a second polarization, wherein the first light beam is capable of being reflected in a first direction by a semi-specular-reflective-mirror, wherein a first portion of the second light beam is capable of being transmitted in the first direction through the beam-splitting-beam-combiner, wherein a second portion of the second light beam is capable of being reflected in a second direction by the semi-specular-reflective-mirror, wherein the first light beam and the first portion of the second light beam are combined as an added light beam and directed towards a wavelength conversion unit, such that the first added light beam is reflected by the wavelength conversion unit as a converted light comprising yellow light.

The laser-phosphor based light generation system may be configured to alter the correlated color temperature of a combined light beam emitting from the laser-phosphor based light generation system. The laser-phosphor based light generation system varies the correlated color temperature and remain optimal flexibility in terms of brightness of the combined light and electrical tunability related to the CCT.

Laser-phosphor based light generation system comprises an asymmetric beam-splitting-beam-combiner. The asymmetric beam-splitting-beam-combiner is arranged such that the luminous flux emitted from each of the first laser bank and the second laser bank is divided into two light beams. The luminous intensity of two light beams is depending on the luminous flux emitted from each of the laser banks. The first laser bank is configured to emit a first light beam having a first luminous intensity. The first light beam is capable of being reflected in a first direction by the beam-splitting-beam-combiner. The first light beam is a first polarization of the light emitted from the first laser bank. The second laser bank is configured to emit a second light beam having a second luminous intensity. A first portion of the second light beam is capable of being transmitted in the first direction through the beam-splitting-beam-combiner. The first portion of the second light beam being transmitted through the beam-splitting-beam-combiner is a second polarization of light emitted form the second laser bank. Furthermore, a second portion of the second light beam is capable of being reflected in a second direction by the beam-splitting-beam-combiner. The second portion of the second light beam being transmitted through the beam-splitting-beam-combiner is a second polarization of light emitted form the second laser bank.

The first polarization of light and the first portion of the second polarization of light are combined and directed in the first direction by the beam-splitting-beam-combiner. The first polarization of light and the first portion of the second polarization of light are directed towards a wavelength conversion unit. The first polarization of light and the first portion of the second polarization of light is reflected by the wavelength conversion unit as a combined and converted light.

When increasing the luminous flux from the first laser bank the converted light's luminous intensity will increase. The luminous intensity of the second portion of the second light beam transmitted through the beam-splitting-beam-combiner will stay the same.

When increasing the luminous flux from the second laser bank the converted light's luminous intensity will increase. The luminous intensity of the second portion of the second light beam transmitted through the beam-splitting-beam-combiner will also increase. This way the two light beams may be controlled separately. At the same time the two light beams may be dependent of each other, because the converted light's comprise light emitted from both the first and the second laser bank.

The light generation system is configured to provide said combined light beam with a correlated color temperature. The correlated color temperature of the combined light emitting from the laser-phosphor based light generation system may be related to the amount of light to be converted and to the wavelength conversion unit. The correlated color temperature of the combined light emitting from the laser-phosphor based light generation system may also be related to the amount of light to be converted relative to the amount of light which is not converted by wavelength conversion unit. The correlated color temperature may be predefined adjustable ranges. The correlated color temperature may be tuneable in a range between 7000-10000 K. Alternatively between 8000-9000 K.

In an embodiment, the first laser light source comprises first collimating laser optics and the second laser light source comprises second collimating laser optics.

The light beam from the first laser light source or the first laser bank may comprise first collimating laser optics, for changing the diverging light emitting from the first laser light source or the first laser bank into a parallel light beam. The light beam from the second laser light source or the second laser bank may comprise second collimating laser optics, for changing the diverging light emitting from the second laser light source or the second laser bank into a parallel light beam.

According to a second aspect of the invention a stage lighting luminaire comprising a light generation system, wherein a first laser bank comprises a plurality of first laser light sources and a second laser bank comprise a plurality of second laser light sources, wherein in use said stage lighting luminaire is capable of providing the combined light beam comprising the converted light and the diffused light.

It is noted that the invention relates to all possible combinations of features recited in the claims. Document WO 2022/143318 A1 discloses a dual laser light emitting device with a dichroic mirror. Document US 2020/333699 A1 discloses a projector light source with a retardation plate and a polarisation beam splitter.

### BRIEF DESCRIPTION OF THE DRAWINGS

This and other aspects of the present invention will now be described in more detail, with reference to the appended drawings showing embodiment(s) of the invention.
Fig. 1 illustrates schematically a first embodiment of a laser-phosphor based light generation system.
Fig. 2 illustrates schematically a second embodiment of a laser-phosphor based light generation system.
Fig. 3 illustrates schematically a third embodiment of a laser-phosphor based light generation system.
Fig. 4 illustrates schematically a fourth embodiment of a laser-phosphor based light generation system.

As illustrated in the figures, the sizes of layers and regions are exaggerated for illustrative purposes and, thus, are provided to illustrate the general structures of embodiments of the present invention. Like reference numerals refer to like elements throughout.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

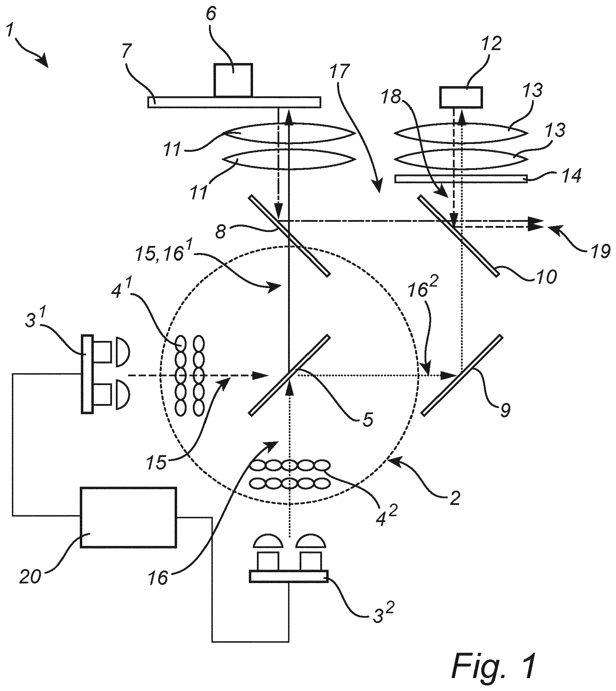

Fig. 1 illustrates schematically a first embodiment of a laser-phosphor based light generation system 1 according to the invention. The light generation system 1 may be a stage lighting engine or part of a stage lighting engine or an alternative light generation system. The light generation system 1 is referred to a stage lighting engine in the following examples. A control unit 20 is electrically connected to a first laser light sources in a first laser bank 3¹ and a second laser light sources in a second laser bank 3². The first laser bank 3¹ comprises at least one light emitting diode configured to emit a blue light range. The second laser bank 3² comprises at least one light emitting diode configured to emit a blue light range. The control unit 20 drives the first laser bank 3¹ and the second laser bank 3² separately. The control unit 20 is capable of varying the luminous flux emitting from the first laser bank 3¹ relative to the luminous flux emitting from the second laser bank 3².

The dotted circle 2 in Fig. 1 comprises an asymmetric beam-splitting-beam-combiner 5, wherein the asymmetric beam-splitting-beam-combiner is based on a semi-specular-reflective-mirror. The dotted circle 2 in Fig. 1 also comprises a first polarizer 4¹ and a second polarizer 4². The first and second polarizer 4¹, 4² may be polarizing beam splitter. The first and second polarizer 4¹, 4² is arranged such that the light emitted from the two laser banks 3¹, 3² each are polarized in the respective polarizer 4¹, 4² before being reflected by and/or transmitted through the beam-splitting-beam-combiner 5. The first light beam may for example be polarized as p-polarized light using a first polarizer 4¹, and the second light beam may for example be polarized as s-polarized light using a second polarizer 4², or vice versa. The beam-splitting-beam-combiner 5 has a first surface and a second surface. The first laser bank 3¹ emits the first light beam 15 through the first polarizer 4¹, such that a first polarization of the first light beam 15 is directed towards a first surface of the beam-splitting-beam-combiner 5. The second laser bank 3² emits a second light beam 16 through the second polarizer 4², such that the second light beam 16 having a second polarization is directed towards a second surface of the beam-splitting-beam-combiner 5. The beam-splitting-beam-combiner 5 is configured with a luminous flux ratio, wherein for example 30% of the first portion of the second light beam 16¹ having a second polarization is transmitted in the first direction through the beam-splitting-beam-combiner 5. 70% of the second portion of the second light beam 16 having a second polarization is reflected in a second direction different that the first direction.

The beam-splitting-beam-combiner 5 is arranged such that the entire first light beam 15, which has a first polarization is reflected a 100 % by the first surface. The first light beam 15 is directed in a first direction away from the beam-splitting-beam-combiner 5. The first light beam 15 with the first polarization is directed towards a wavelength conversion unit 6.

The beam-splitting-beam-combiner 5 is arranged such that a first portion 16¹ of the second light beam 16 which has a second polarization is transmitted through the beam-splitting-beam-combiner 5. The beam-splitting-beam-combiner 5 is furthermore arranged such that the first portion 16¹ of the second light beam 16 is entering a second surface of the beam-splitting-beam-combiner 5. The first portion 16¹ of the second light beam 16 exits the first surface of the beam-splitting-beam-combiner 5. The first portion 16¹ of the second light beam 16 is directed in the first direction away from the beam-splitting-beam-combiner 5. A total of 130% light beam comprises 100% of the first light beam 15 having a first polarization and 30% of the second light beam 16 having the second polarization are combined directed towards the wavelength conversion unit 6. The wavelength conversion unit 6 may comprise a luminescent body 7 comprising a luminescent material e.g. a phosphor element e.g. a tile or slab, i.e., a phosphor wheel or static phosphor.

The first light beam 15 having a first polarization and the first portion 16¹ of the second light beam 16 having a second polarization are transmitted through a first transmitting and reflecting unit 8 and through two optics 11. At least part of said first light beam 15 and at least part of said first portion of said second light beam 16¹ is converted by said wavelength conversion unit into converted light 17, which comprising a range of yellow light. the converted light is transmitted through two optics 11 towards the first transmitting and reflecting unit 8. The first transmitting and reflecting unit 8, which may be a dichroic mirror, reflects the converted light 17 in a second direction towards a beam-combiner 10, e.g., a polarizing beam splitter and/or a dichroic mirror.

The semi-specular-reflective-mirror is also configured to reflect 70% of the second light beam 16, having a second polarization as a second portion 16² of the second light beam 16, which is reflected in a second direction different from the first direction. The second portion 16² of the second light beam 16, is reflected away from the beam-splitting-beam-combiner 5. The second portion 16² of the second light beam 16 is directed towards a reflecting unit 9. The reflecting unit 9 which may also be a dichroic mirror, is arranged such that the reflecting unit 9 reflects the second portion 16² of the second light beam 16, in a predetermined direction towards a reflective diffuser 12. The second portion 16² of the second light beam 16, is transmitted through a quarter-wave plate 14 and two focusing optics 13 before reaching the reflective diffuser 12. The reflective diffuser 12 reflects the second portion16² of the second light beam 16, as a reflected diffused light 18 towards the beam-combiner 10. The beam-combiner 10 reflects the reflected diffused light 18 in a first direction similar to the direction of the converted light 17, such that the converted light 17 is combined with reflected diffused light 18 in a combined light beam 19.

When varying the luminous intensity of the first light beam 15 and of the second light beam 16 from both laser banks 3¹, 3², the correlated color temperature of the combined light 19 can be varied to a predetermined setting. As an example, the predetermined setting may be a correlated color temperature between 2700 - 10000 Kelvin having a color rending index more than 70, preferably more than 80. An optimal flexibility is provided in terms of brightness of the combined light 19. When the control unit 20 varies the luminous flux in the of the first light beam 15 emitting from the first laser bank 3¹ relative to the luminous flux in the second light beam 16 emitting from the second laser bank 3², the control unit 20 thereby alter the correlated color temperature, CCT, such that the laser-phosphor based stage lighting engine 1 provides an electrical CCT tunability.

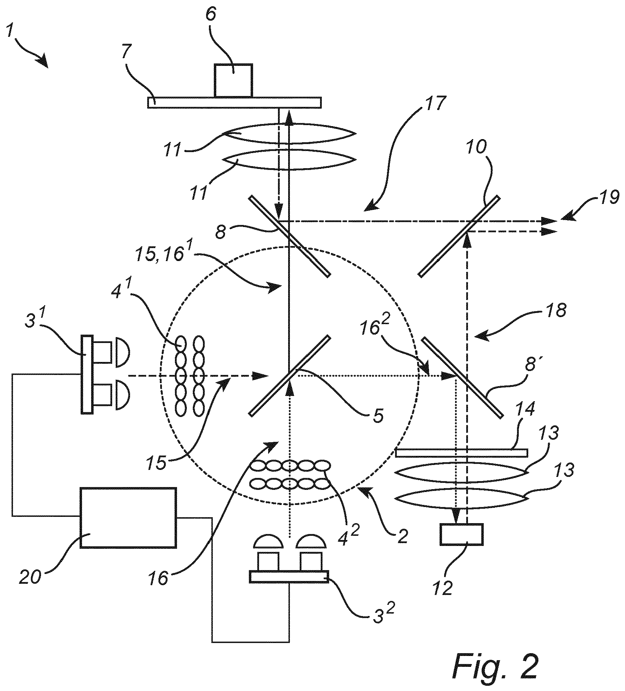

Fig. 2 illustrates a second embodiment of a laser-phosphor based light generation system 1. The light generation system 1 is referred to a stage lighting engine in the following example. A control unit 20 is electrically connected to the first laser bank 3¹ and the second laser bank 3². This is similar to the first embodiment explained in fig. 1.

The asymmetric beam-splitting-beam-combiner 2 illustrated within the dotted circle is also similar to the first embodiment explained in fig. 1. Still a total of 130% light beam comprises 100% of the first polarization of the first light beam 15 and 30% of the second light beam 16, which is a first portion 16¹ of the second light beam 16, are combined directed towards the wavelength conversion unit 6.

The first light beam 15 and the first portion 16¹ of the second light beam 16 are transmitted through a first transmitting and reflecting unit 8, which in this example is a dichroic mirror, and through two first optics 11. The first light beam 15 and the first portion 16¹ of the second light beam 16 are converted into a converted light 17, comprising a yellow light range, and reflected through two first optics 11 towards the first transmitting and reflecting unit 8. The first transmitting and reflecting unit 8 reflect the converted light 17 in a second direction towards a beam-combiner 10, which in this example is a dichroic mirror.

The semi-specular-reflective-mirror 5 is also configured to reflect 70% of the second light beam 16 having a second polarization which is a second portion 16² of the second light beam 16, is reflected in a second direction different from the first direction. The second portion 16² of the second light beam 16, is reflected away from the semi-specular-reflective-mirror 5. The second portion 16² of the second light beam 16, directed towards a second transmitting and reflecting unit 8', which may be a dichroic mirror or a polarizing beam splitter. The second transmitting and reflecting unit 8' is arranged such that the second transmitting and reflecting unit 8' reflects the second portion 16² of the second light beam 16 in a predetermined direction opposite the first direction towards a reflective diffuser 12. The second portion 16² of the second light beam 16 is transmitted through a quarter-wave plate 14 and two optics 13 before reaching the reflective diffuser 12. The reflective diffuser 12 reflects the second portion 16² of the second light beam 16 as a reflected diffused light 18 towards the beam-combiner 10. The beam-combiner 10 reflects the reflected diffused light 18 towards in a first direction similar to the direction of the converted light 17. The beam-combiner 10 may reflect the second portion 16² of the second light beam 16 and for transferring the converted light 17. The converted light 17 is combined with reflected diffused light 18 in a combined light beam 19.

When the control unit 20 varies the luminous flux in the first light beam 15 emitted from the first laser bank 3¹ relative to the luminous flux in the second light beam 16 emitted from the second laser bank 3², the control unit 20 thereby alters the correlated color temperature, CCT, such that the laser-phosphor based stage lighting engine 1 provides an electrical CCT tunability.

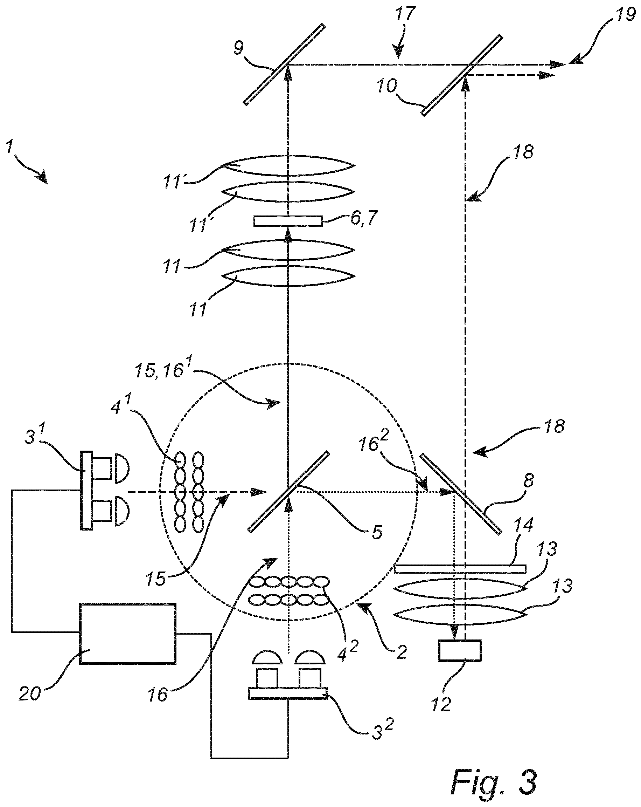

Fig. 3 illustrates schematically a third embodiment of a laser-phosphor based light generation system 1. The light generation system 1 is referred to as a stage lighting engine in the following example. A control unit 20 is electrically connected to the first laser bank 3¹ and the second laser bank 3². This is similar to the first embodiment explained in relation to Fig. 1.

The first light beam 15 and the first portion 16¹ of the second light beam 16 are transmitted through two first focusing optics 11 and directed towards the wavelength converter unit 6. The first light beam 15 and the first portion 16¹ of the second light beam 16 are converted into converted light 17 when passing through the wavelength conversion unit 6. The wavelength conversion unit 6 may comprise a luminescent body 7 which may be a phosphor tile or slab, which converts the first light beam 15 and the first portion 16¹ of the second light beam 16 into yellow light. The converted light 17 is thereafter transmitted through two second focusing optics 11' and directed towards a reflecting unit 9. The reflecting unit 9 may be a dichroic mirror, which reflects the converted light 17 in a predefine direction towards a beam-combiner 10, e.g., a dichroic mirror.

The semi-specular-reflective-mirror 5 is reflects portion of the second light beam 16 having a second polarization, which is a second portion 16² of the second light beam 16, is reflected in a second direction different from the first predefined direction. The second portion 16² of the second light beam 16, is directed towards a transmitting and reflecting unit 8', which may be a dichroic mirror or a polarizing beam splitter. The transmitting and reflecting unit 8 reflect the second portion 16² of the second light beam 16 in a predetermined direction opposite the first direction towards a reflective diffuser 12. The second portion 16² of the second light beam 16 is transmitted through a quarter-wave plate 14 and two focusing optics 13 before reaching the reflective diffuser 12. The reflective diffuser 12 reflects the second portion 16² of the second light beam 16 as a reflected diffused light 18 towards the beam-combiner 10. The beam-combiner 10 reflects the reflected diffused light 18 towards in a first direction similar to the direction of the converted light 17. The beam-combiner 10 may be a dichroic mirror for reflecting the second portion 16² of the second light beam 16 and for transferring the converted light 17. The converted light 17 is combined with reflected diffused light 18 in a combined light beam 19.

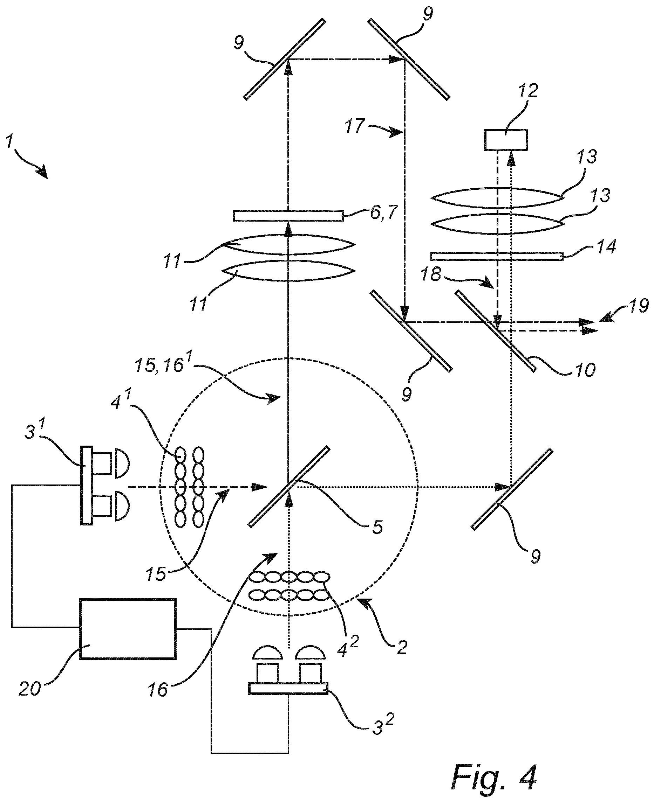

Fig. 4 illustrates schematically a fourth embodiment of a laser-phosphor based light generation system 1. The light generation system 1 is referred to a stage lighting engine in the following example. A control unit 20 is electrically connected to the first laser bank 3¹ and the second laser bank 3². This is similar to the first embodiment explained in fig. 1. The first light beam 15 and the first portion 16¹ of the second light beam 16 are transmitted through two focusing optics 11 and directed towards the wavelength converter unit 6. The wavelength conversion unit 6 may comprise a luminescent body 7, which may be a conversion tile, which convert the first light beam 15 and the first portion 16¹ of the second light beam 16 into a converted light 17. The converted light 17 is directed towards a first reflecting unit 9, and a second reflecting unit 9 and to a third reflecting unit 9, changing the direction of the converted light 17. The reflecting unit 9 may be a dichroic mirror, which reflects the converted light 17 in a predefine direction towards a beam-combiner 10.

The semi-specular-reflective-mirror reflect a portion of the second light beam 16, having a second polarization as a second portion 16² of the second light beam 16, in a second predetermined direction different from the first direction. The second portion 16² of the second light beam 16 is directed towards a reflecting unit 9. The reflecting unit 9 may also be a dichroic mirror, which is arranged such that the reflecting unit 9 reflects the second portion 16² of the second light beam 16, in a predetermined direction towards a reflective diffuser 12 through a beam-combiner 10. The second portion 16² of the second light beam 16, is transmitted through a quarter-wave plate 14 and two focusing optics 13 before reaching the reflective diffuser 12. The reflective diffuser 12 reflects the second portion16² of the second light beam 16, as a reflected diffused light 18 towards the beam-combiner 10. The beam-combiner 10 reflects the reflected diffused light 18 in a first direction similar to the direction of the converted light 17, such that the converted light 17 is combined with reflected diffused light 18 in a combined light beam 19. The correlated color temperature of the combined light 19 can be varied according to predetermined settings, when the control unit 20 varies the luminous intensity from each of the first laser bank 3¹ and the second laser bank 3².

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A light generation system comprising a first laser light source (3¹), a second laser light source (3²), a wavelength conversion unit (6), a diffuser, a beam-combiner (10), at least one transmitting and/or reflecting unit (8,8',9) and a beam-splitting-beam-combiner (5), wherein:
- said first laser light source (3¹) is configured to generate a first light beam (15) having a first polarization;
- said second laser light source (3²) is configured to generate a second light beam (16) having a second polarization different from the first polarization;
- said beam-splitting-beam-combiner (5) comprises a reflective polarizer and a specular semi-reflective layer, wherein said beam-splitting-beam-combiner is configured to substantially reflect said first light beam (15) and transmit a first portion of said second light beam (16¹) in a first direction, such that said first light beam (15) and said first portion of said second light beam (16¹) are merged to an added light beam (15,16¹), and said beam-splitting-beam-combiner is configured to substantially reflect a second portion of said second light beam (16²) in a second direction different from the first direction;
- said wavelength conversion unit (6) is configured to convert at least part of said first light beam (15) of the added light beam and at least part of said first portion of said second light beam (16¹) of the added light beam into a converted light (17);
- said at least one transmitting and/or reflecting unit (8, 8', 9) configured to reflect and/or transmit said converted light and/or the second portion of said second light beam (16²) in a third direction,
- said diffuser (12) is configured to diffuse at least a part of the second portion of said second light beam (16²) as a diffused light (18);
- said beam-combiner (10) configured to provide a combined light beam (19) comprising said converted light (17) and said diffused light (18); and
- wherein the combined light beam (19) is white light having a correlated color temperature in a range from 2700K to 10000K and a color rendering index of at least 70.

2. Light generation system according to according to claim 1, wherein the first laser light beam comprises blue light having a first dominant peak wavelength λ1 and the second light beam comprises blue light having a second dominant peak wavelength λ2, wherein λ2-λ1≥20nm.

3. Light generation system according to according to claim 1 or 2, wherein the specular semi-reflective layer is arranged on a surface of the reflective polarizer, wherein a reflectivity of said specular semi-reflective layer is in a range from 20% to 80% in a visible wavelength range.

4. Light generation system according to according to claim 3, wherein the reflectivity of said specular semi-reflective layer is in a range from 35% to 65%.

5. Light generation system according to any one of the preceding claims, wherein the specular semi-reflective layer comprises a first dichroic mirror.

6. Light generation system according to any one of the preceding claims, wherein the combined light beam (19) is white light having said correlated color temperature in a range from 7000K to 10000K and a color rendering index of at least 80.

7. Light generating system according to any one of the preceding claims, wherein the first laser light source (3¹) comprises first collimating laser optics (11) and the second laser light source (3²) comprises second collimating laser optics (11').

8. Light generation system according to any one of the preceding claims, wherein said at least one transmitting and/or reflecting unit (8) comprises a second dichroic mirror configured to:
(i) transmit said added light beam (15,16¹) towards said wavelength conversion unit (6) and configured to reflect said converted light (17); or
(ii) reflect said added light beam (15,16¹) towards said wavelength conversion unit (6) and configured to transmit said converted light (17).

9. Light generation system according to any one of the preceding claims, wherein one of the following:
(i) said light generation system comprises at least one first optic (11) arranged between said transmitting and reflecting unit (8) and said wavelength conversion unit (6), wherein the first optic (11) is configured to focus said added light beam (15,16¹) onto the wavelength conversion unit (6);
(ii) wherein said wavelength conversion unit (6) is arranged between at least one first optic (11) and at least one second optic (11'), wherein the first optic (11) is configured to focus said added light beam (15,16¹) onto the wavelength conversion unit (6), wherein the second optic (11') is configured to collimate said converted light (17).

10. Light generation system according to any one of the preceding claims, wherein said at least one transmitting and/or reflecting unit (8,8',9) comprises a polarizing beam splitter arranged between said beam-splitting-beam-combiner (5) and said diffuser (12), wherein said diffuser is a reflective diffuser.

11. Light generation system according to claim 10, wherein a quarter-wave plate (14) is arranged between said polarizing beam splitter (8') and said reflective diffuser (12).

12. Light generation system according to any one of the preceding claims, wherein said light generation system (1) comprises a control unit (20) configured to individually control:
(i) a first luminous intensity of said first light beam (15) and a second luminous intensity of the second light beam (16), such that in use said control unit (20) controls a ratio between the first and second luminous intensity for in use controlling the correlated color temperature of said combined light beam (19).

13. Light generation system according to any one of the preceding claims, wherein said wavelength conversion unit (6) comprises a luminescent body (7) and a reflector, wherein the reflector is arranged at a side of the luminescent body facing away from a side receiving the added light beam (000).

14. Light generation system according to claim 12, wherein the luminescent body (7) comprises a ceramic luminescent element, wherein the ceramic luminescent element comprises a luminescent material of the type A3B5O12:Ce, wherein in component A comprises one or more of Y, La, Gd, Tb and Lu, and wherein component B comprises one or more of Al, Ga, In and Sc.

15. Stage lighting luminaire comprising a light generation system according to any of the preceding claims 1-14, wherein a first laser bank comprises a plurality of first laser light sources (3¹) and a second laser bank comprises a plurality of second laser light sources (3²), wherein in use said stage lighting luminaire is capable of providing the combined light beam (19) comprising the converted light (17) and the diffused light (18).

## Patentansprüche

1. Lichterzeugungssystem, das eine erste Laserlichtquelle (3¹), eine zweite Laserlichtquelle (3²), eine Wellenlängenumwandlungseinheit (6), einen Diffusor, einen Strahlkombinierer (10), mindestens eine durchlässige und/oder reflektierende Einheit (8, 8', 9) und einen strahlteilenden Strahlkombinierer (5) umfasst, wobei:
- die erste Laserlichtquelle (3¹) konfiguriert ist, um einen ersten Lichtstrahl (15) zu erzeugen, der eine erste Polarisation aufweist;
- die zweite Laserlichtquelle (3²) konfiguriert ist, um einen zweiten Lichtstrahl (16) zu erzeugen, der eine zweite Polarisation aufweist, die sich von der ersten Polarisation unterscheidet;
- der strahlteilende Strahlkombinierer (5) einen reflektierenden Polarisator und eine spiegelnde halbreflektierende Schicht umfasst, wobei der strahlteilende Strahlkombinierer konfiguriert ist, um den ersten Lichtstrahl (15) im Wesentlichen zu reflektieren und einen ersten Anteil des zweiten Lichtstrahls (16¹) in einer ersten Richtung zu leiten, sodass der erste Lichtstrahl (15) und der erste Anteil des zweiten Lichtstrahls (16¹) zu einem addierten Lichtstrahl (15,16¹) kombiniert werden, und der strahlteilende Strahlkombinierer konfiguriert ist, um einen zweiten Anteil des zweiten Lichtstrahls (16²) im Wesentlichen in einer zweiten Richtung zu reflektieren, die sich von der ersten Richtung unterscheidet;
- die Wellenlängenumwandlungseinheit (6) konfiguriert ist, um mindestens einen Teil des ersten Lichtstrahls (15) des addierten Lichtstrahls und mindestens einen Teil des ersten Abschnitts des zweiten Lichtstrahls (16¹) des addierten Lichtstrahls in umgewandeltes Licht (17) umzuwandeln;
- die mindestens eine durchlässige und/oder reflektierende Einheit (8, 8', 9) konfiguriert ist, um das umgewandelte Licht und/oder den zweiten Anteil des zweiten Lichtstrahls (16²) in einer dritten Richtung zu reflektieren und/oder zu leiten,
- der Diffusor (12) konfiguriert ist, um mindestens einen Teil des zweiten Abschnitts des zweiten Lichtstrahls (16²) als diffuses Licht (18) zu streuen;
- der Strahlkombinierer (10) konfiguriert ist, um einen kombinierten Lichtstrahl (19) bereitzustellen, der das umgewandelte Licht (17) und das gestreute Licht (18) umfasst, und
- wobei der kombinierte Lichtstrahl (19) aus weißem Licht besteht, das eine korrelierte Farbtemperatur in einem Bereich von 2700 K bis 10.000 K und einen Farbwiedergabeindex von mindestens 70 aufweist.

2. Lichterzeugungssystem nach Anspruch 1, wobei der erste Laserlichtstrahl blaues Licht umfasst, das eine erste dominante Spitzenwellenlänge λ1 aufweist, und der zweite Lichtstrahl blaues Licht umfasst, das eine zweite dominante Spitzenwellenlänge λ2 aufweist, wobei λ2 - λ1 ≥ 20 nm.

3. Lichterzeugungssystem nach Anspruch 1 oder 2, wobei die spiegelnde halbreflektierende Schicht auf einer Oberfläche des reflektierenden Polarisators angeordnet ist, wobei das Reflexionsvermögen der spiegelnden halbreflektierenden Schicht im sichtbaren Wellenlängenbereich in einem Bereich von 20 % bis 80 % liegt.

4. Lichterzeugungssystem nach Anspruch 3, wobei das Reflexionsvermögen der spiegelnden halbreflektierenden Schicht in einem Bereich von 35 % bis 65 % liegt.

5. Lichterzeugungssystem nach einem der vorstehenden Ansprüche, wobei die spiegelnde halbreflektierende Schicht einen ersten dichroitischen Spiegel umfasst.

6. Lichterzeugungssystem nach einem der vorstehenden Ansprüche, wobei der kombinierte Lichtstrahl (19) aus weißem Licht besteht, das die korrelierte Farbtemperatur in einem Bereich von 7000 K bis 10.000 K und einen Farbwiedergabeindex von mindestens 80 aufweist.

7. Lichterzeugungssystem nach einem der vorstehenden Ansprüche, wobei die erste Laserlichtquelle (3¹) eine erste kollimierende Laseroptik (11) umfasst und die zweite Laserlichtquelle (3²) eine zweite kollimierende Laseroptik (11') umfasst.

8. Lichterzeugungssystem nach einem der vorstehenden Ansprüche, wobei die mindestens eine durchlässige und/oder reflektierende Einheit (8) einen zweiten dichroitischen Spiegel umfasst, der konfiguriert ist zum:
(i) Leiten des addierten Lichtstrahls (15, 16¹) in Richtung der Wellenlängenumwandlungseinheit (6) und konfiguriert ist, um das umgewandelte Licht (17) zu reflektieren; oder
(ii) Reflektieren des addierten Lichtstrahls (15, 16¹) in Richtung der Wellenlängenumwandlungseinheit (6) und konfiguriert ist, um das umgewandelte Licht (17) zu übertragen.

9. Lichterzeugungssystem nach einem der vorstehenden Ansprüche, wobei eines der Folgenden gilt:
(i) das Lichterzeugungssystem umfasst mindestens eine erste Optik (11), die zwischen der durchlässigen und reflektierenden Einheit (8) und der Wellenlängenumwandlungseinheit (6) angeordnet ist, wobei die erste Optik (11) konfiguriert ist, um den addierten Lichtstrahl (15, 16¹) auf die Wellenlängenumwandlungseinheit (6) zu fokussieren;
(ii) wobei die Wellenlängenumwandlungseinheit (6) zwischen mindestens einer ersten Optik (11) und mindestens einer zweiten Optik (11') angeordnet ist, wobei die erste Optik (11) konfiguriert ist, um den addierten Lichtstrahl (15, 16¹) auf die Wellenlängenumwandlungseinheit (6) zu fokussieren, wobei die zweite Optik (11') konfiguriert ist, um das umgewandelte Licht (17) zu kollimieren.

10. Lichterzeugungssystem nach einem der vorstehenden Ansprüche, wobei die mindestens eine durchlässige und/oder reflektierende Einheit (8,8',9) einen polarisierenden Strahlteiler umfasst, der zwischen dem strahlteilenden Strahlkombinierer (5) und dem Diffusor (12) angeordnet ist, wobei es sich bei dem Diffusor um einen reflektierenden Diffusor handelt.

11. Lichterzeugungssystem nach Anspruch 10, wobei eine Viertelwellenplatte (14) zwischen dem polarisierenden Strahlteiler (8') und dem reflektierenden Diffusor (12) angeordnet ist.

12. Lichterzeugungssystem nach einem der vorstehenden Ansprüche, wobei das Lichterzeugungssystem (1) eine Steuereinheit (20) umfasst, die konfiguriert ist, um Folgendes individuell zu steuern:
(i) eine erste Lichtstärke des ersten Lichtstrahls (15) und eine zweite Lichtstärke des zweiten Lichtstrahls (16), sodass die Steuereinheit (20) im Betrieb ein Verhältnis zwischen der ersten und der zweiten Lichtstärke steuert, um die korrelierte Farbtemperatur des kombinierten Lichtstrahls (19) zu steuern.

13. Lichterzeugungssystem nach einem der vorstehenden Ansprüche, wobei die Wellenlängenumwandlungseinheit (6) einen lumineszierenden Körper (7) und einen Reflektor umfasst, wobei der Reflektor an einer Seite des lumineszierenden Körpers angeordnet ist, die von der Seite abgewandt ist, die den addierten Lichtstrahl (000) aufnimmt.

14. Lichterzeugungssystem nach Anspruch 12, wobei der lumineszierende Körper (7) ein keramisches Leuchtelement umfasst, wobei das keramische Leuchtelement einen Leuchtstoff des Typs A3B5O12:Ce umfasst, wobei Komponente A eines oder mehrere der Elemente Y, La, Gd, Tb und Lu umfasst und wobei Komponente B eines oder mehrere der Elemente Al, Ga, In und Sc umfasst.

15. Bühnenbeleuchtungsleuchte, die ein Lichterzeugungssystem nach einem der vorstehenden Ansprüche 1 bis 14 umfasst, wobei eine erste Laserbank eine Vielzahl von ersten Laserlichtquellen (3¹) umfasst und eine zweite Laserbank eine Vielzahl von zweiten Laserlichtquellen (3²) umfasst, wobei die Bühnenbeleuchtungsleuchte im Betrieb in der Lage ist, den kombinierten Lichtstrahl (19) bereitzustellen, der das konvertierte Licht (17) und das gestreute Licht (18) umfasst.

## Revendications

1. Système de génération de lumière comprenant une première source de lumière laser (3¹), une seconde source de lumière laser (3²), une unité de conversion de longueur d'onde (6), un diffuseur, un combineur de faisceaux (10), au moins une unité de transmission et/ou de réflexion (8, 8', 9) et un combineur de faisceaux de division de faisceau (5), dans lequel :
- ladite première source de lumière laser (3¹) est configurée pour générer un premier faisceau lumineux (15) présentant une première polarisation ;
- ladite seconde source de lumière laser (3²) est configurée pour générer un second faisceau lumineux (16) présentant une seconde polarisation différente de la première polarisation ;
- ledit combineur de faisceaux de division de faisceau (5) comprend un polariseur réfléchissant et une couche semi-réfléchissante spéculaire, dans lequel ledit combineur de faisceaux de division de faisceau est configuré pour réfléchir sensiblement ledit premier faisceau lumineux (15) et transmettre une première partie dudit second faisceau lumineux (16¹) dans une première direction, de telle sorte que ledit premier faisceau lumineux (15) et ladite première partie dudit second faisceau lumineux (16¹) soient fusionnés en un faisceau lumineux ajouté (15, 16¹), et ledit combineur de faisceaux de division de faisceau est configuré pour réfléchir sensiblement une seconde partie dudit second faisceau lumineux (16²) dans une deuxième direction différente de la première direction ;
- ladite unité de conversion de longueur d'onde (6) est configurée pour convertir au moins une partie dudit premier faisceau lumineux (15) du faisceau lumineux ajouté et au moins une partie de ladite première partie dudit second faisceau lumineux (16¹) du faisceau lumineux ajouté en une lumière convertie (17) ;
- ladite au moins une unité de transmission et/ou de réflexion (8, 8', 9) est configurée pour réfléchir et/ou transmettre ladite lumière convertie et/ou la seconde partie dudit second faisceau lumineux (16²) dans une troisième direction,
- ledit diffuseur (12) est configuré pour diffuser au moins une partie de la seconde partie dudit second faisceau lumineux (16²) sous la forme d'une lumière diffusée (18) ;
- ledit combineur de faisceaux (10) est configuré pour fournir un faisceau lumineux combiné (19) comprenant ladite lumière convertie (17) et ladite lumière diffusée (18) ; et
- dans lequel le faisceau lumineux combiné (19) est de la lumière blanche présentant une température de couleur corrélée dans une plage allant de 2 700 K à 10 000 K et un indice de rendu des couleurs d'au moins 70.

2. Système de génération de lumière selon la revendication 1, dans lequel le premier faisceau de lumière laser comprend de la lumière bleue présentant une première longueur d'onde de crête dominante λ1 et le second faisceau de lumière comprend de la lumière bleue présentant une seconde longueur d'onde de crête dominante λ2, dans lequel λ2-λ1≥20 nm.

3. Système de génération de lumière selon la revendication 1 ou 2, dans lequel la couche semi-réfléchissante spéculaire est agencée sur une surface du polariseur réfléchissant, dans lequel une réflectivité de ladite couche semi-réfléchissante spéculaire est comprise dans une plage de 20 % à 80 % dans une plage de longueurs d'onde visibles.

4. Système de génération de lumière selon la revendication 3, dans lequel la réflectivité de ladite couche semi-réfléchissante spéculaire est comprise dans une plage de 35 % à 65 %.

5. Système de génération de lumière selon l'une quelconque des revendications précédentes, dans lequel la couche semi-réfléchissante spéculaire comprend un premier miroir dichroïque.

6. Système de génération de lumière selon l'une quelconque des revendications précédentes, dans lequel le faisceau lumineux combiné (19) est une lumière blanche et présente ladite température de couleur corrélée comprise dans une plage de 7 000 K à 10 000 K et un indice de rendu des couleurs d'au moins 80.

7. Système de génération de lumière selon l'une quelconque des revendications précédentes, dans lequel la première source de lumière laser (3¹) comprend une première optique laser de collimation (11) et la seconde source de lumière laser (3²) comprend une seconde optique laser de collimation (11').

8. Système de génération de lumière selon l'une quelconque des revendications précédentes, dans lequel ladite au moins une unité de transmission et/ou de réflexion (8) comprend un second miroir dichroïque configuré pour :
(i) transmettre ledit faisceau lumineux ajouté (15, 16¹) vers ladite unité de conversion de longueur d'onde (6) et configuré pour réfléchir ladite lumière convertie (17) ; ou
(ii) réfléchir ledit faisceau lumineux ajouté (15, 16¹) vers ladite unité de conversion de longueur d'onde (6) et configuré pour transmettre ladite lumière convertie (17).

9. Système de génération de lumière selon l'une quelconque des revendications précédentes, dans lequel l'un de ce qui suit s'applique :
(i) ledit système de génération de lumière comprend au moins une première optique (11) agencée entre ladite unité de transmission et de réflexion (8) et ladite unité de conversion de longueur d'onde (6), dans lequel la première optique (11) est configurée pour focaliser ledit faisceau lumineux ajouté (15, 16¹) sur l'unité de conversion de longueur d'onde (6) ;
(ii) dans lequel ladite unité de conversion de longueur d'onde (6) est agencée entre au moins une première optique (11) et au moins une seconde optique (11'), dans lequel la première optique (11) est configurée pour focaliser ledit faisceau lumineux ajouté (15, 16¹) sur l'unité de conversion de longueur d'onde (6), dans lequel la seconde optique (11') est configurée pour collimater ladite lumière convertie (17).

10. Système de génération de lumière selon l'une quelconque des revendications précédentes, dans lequel ladite au moins une unité de transmission et/ou de réflexion (8, 8', 9) comprend un diviseur de faisceau polarisant agencé entre ledit combineur de faisceaux de division de faisceau (5) et ledit diffuseur (12), dans lequel ledit diffuseur est un diffuseur réfléchissant.

11. Système de génération de lumière selon la revendication 10, dans lequel une lame quart d'onde (14) est agencée entre ledit diviseur de faisceau polarisant (8') et ledit diffuseur réfléchissant (12).

12. Système de génération de lumière selon l'une quelconque des revendications précédentes, dans lequel ledit système de génération de lumière (1) comprend une unité de commande (20) configurée pour commander individuellement :
(i) une première intensité lumineuse dudit premier faisceau lumineux (15) et une seconde intensité lumineuse du second faisceau lumineux (16), de sorte que lors de l'utilisation, ladite unité de commande (20) commande un rapport entre les première et seconde intensités lumineuses pour, lors de l'utilisation, commander la température de couleur corrélée dudit faisceau lumineux combiné (19).

13. Système de génération de lumière selon l'une quelconque des revendications précédentes, dans lequel ladite unité de conversion de longueur d'onde (6) comprend un corps luminescent (7) et un réflecteur, dans lequel le réflecteur est agencé sur un côté du corps luminescent opposé à un côté recevant le faisceau lumineux ajouté (000).

14. Système de génération de lumière selon la revendication 12, dans lequel le corps luminescent (7) comprend un élément luminescent en céramique, dans lequel l'élément luminescent en céramique comprend un matériau luminescent du type A3B5O12:Ce, dans lequel le composant A comprend un ou plusieurs éléments parmi Y, La, Gd, Tb et Lu, et dans lequel le composant B comprend un ou plusieurs éléments parmi Al, Ga, In et Sc.

15. Luminaire d'éclairage de scène comprenant un système de génération de lumière selon l'une quelconque des revendications précédentes 1 à 14, dans lequel un premier banc de lasers comprend une pluralité de premières sources de lumière laser (3¹) et un second banc de lasers comprend une pluralité de secondes sources de lumière laser (3²), dans lequel, lors de l'utilisation, ledit luminaire d'éclairage de scène est capable de fournir le faisceau lumineux combiné (19) comprenant la lumière convertie (17) et la lumière diffusée (18).
